# EUROPEAN PATENT APPLICATION

(11) **EP 4 762 898 A1**
(43) Date of publication of application: **24.06.2026**
(21) Application number: 25225725.8
(22) Date of filing: 19.12.2025
(51) Int. Cl.: A01C 5/06, A01C 23/00, A01C 23/02

(54) **A TRAILING SHOE OR DISC FOR A WORKING MACHINE AND A WORKING MACHINE WITH SAID TRAILING SHOE OR DISC**

(30) Priority: 20.12.2024 SI 202400175
(71) Applicant: BeTEC d.o.o., 3230 Sentjur (SI)
(72) Inventor: Stojan, Tomaz, 3230 Sentjur (SI); Brecko, Jure, 3230 Sentjur (SI); Brecko, Darko, 3230 Sentjur (SI)
(74) Representative: Patentni Biro AF d.o.o.

(57) **Abstract**

The present invention belongs to the field of soil treatment in agriculture. The invention relates to a trailing shoe for a working machine and to a working machine with said trailing shoe. The trailing shoe comprises:
- a spring, the lower end of which is shaped like the letter Y provided with an intermediate space for mounting a base housing for a cutting element,
- the cutting element shaped like a disc, which is supported by two ball bearings, through which a support axis is installed, wherein a holder for the slurry supply behind the disc is also mounted on said axis,
- a blockade arranged to limit the depth of the disc's penetration into the ground,
- an injection holder, which is mounted on the disc's axis so that it rotates freely around the disc, wherein said holder is mounted in the center of the disc to adapt to the terrain,
- an injection nozzle,
- a plough configured to copy the terrain, wherein the plough is mounted or placed on the same holder with the slurry supply,
- a spring or a movable element that is mounted on one side to the bracket of the entire disc, and on the other side to the slurry supply holder, which also carries the plough, wherein depending on the position of the plough the position of the nozzle is adjusted so that regardless of the angle of the spring or the movable element to the terrain, the lower part of the nozzle is parallel to the terrain, and wherein the spring or the movable element constantly presses said holder towards the ground.

## Description

### Field of the invention

The present invention belongs to the field of soil treatment in agriculture, more precisely to the field of devices for distributing liquid manure or similar fertilizers, especially components of said devices. The invention relates to a trailing shoe or disc for a working machine, preferably a slurry distributor, and also to a working machine, preferably a slurry distributor, with said trailing shoe or disc, respectively.

### Background of the invention and the technica problem

Slurry or liquid fertilizer distribution devices are systems designed for fertilizing fields, as the fertilizer is fed directly into the soil from the slurry tank through specially designed pipes mounted on a wide frame. The ends of the aforementioned pipes have a specially designed final part, or so-called trailing or trailing shoe, which is adapted to cut into the surface, which aerates the soil, while at the same time the slurry or liquid fertilizer is fed into the created channel. Injection helps to meet the nutritional needs of crops, because the amount of injected fertilizer is higher, and at the same time the impact on the environment is reduced, since the distribution is more precise (without polluting plant leaves) and with fewer unpleasant odors.

The trailing shoe system has a fixed cutting part that cuts, wherein a slurry supply is provided behind it, so that slurry flows into a created channel. Known trailing shoes cannot adapt to the shape of the terrain, as the shoes rise or fall depending on the terrain, which prevents precise injection of slurry or liquid fertilizer, and thus all the advantages of the aforementioned injection are lost. A disc shoe is a further improved functionality of the trailing shoe described above. The fixed cutting part rotates, and the disc wears evenly and remains sharp. Behind it is a flexible slurry supply. It has similar problems as the trailing shoe without the disc.

The technical problem that the present invention solves is therefore ensuring stable injection directly into the ground, i.e. into a channel created by means of a disc forming a part of the trailing shoe.

### Prior art

EP4052554 relates to a trailing shoe distributor for distributing liquid manure, comprising a plurality of liquid manure hoses with outlet openings for applying the liquid manure to a surface; a plurality of trailing shoes which, in a working position of the trailing shoe distributor are designed to cut the surface below before the liquid manure reaches the substrate from the outlet openings; several incorporation units which, in the working position of the trailing shoe distributor, are designed to incorporate the applied liquid manure into the substrate by rolling along the surface as the trailing shoe distributor moves along the substrate. This solution has a fixed supply of slurry. In comparison to the present invention the supply of the slurry is designed differently, as the supply is mounted in a rotatable manner relative to the centre of the disc, so as to allow terrain copying.

Document EP0629338 discloses a shoe comprising at least one trailing spreader chute suspended from a chassis with an inclination at an acute angle relative to the ground and to the direction of forward travel, and a circular coulter placed vertically ahead of the chute and in the axis of the latter. The trailing chute has an anterior end with a tapered profile. A system of springs which act in cascade ensures that a satisfactory working height is maintained regardless of the operating pressure applied to the shoe.

Patent application EP0599430 describes a solution, which takes advantage of the kinematics for adjusting the height of the back supply. For this purpose, handles allowing lifting or lowering are used. This solution differs from the present invention.

### Description of the solution to the technical problem

The present invention solves the disadvantages of existing trailing shoes for manure spreaders. The technical problem is solved as defined in the independent claim, wherein the preferred embodiments are defined in dependent claims.

The essence of the present invention is in that the trailing shoe or the disc injector, respectively, comprises:
- a spring designed as a long flat element, a lower end of which is shaped like the letter Y so that the element has two legs with an intermediate space arranged for mounting a base housing for mounting the cutting element,
- the base housing of the cutting element, which is arranged for mounting the cutting element,
- the cutting element shaped like a disc, which is supported by two ball bearings, through which a support axis is installed, wherein a holder of the supply is mounted on said axis behind the disc, and wherein said axis is mounted on the holder on each side of the Y-shaped spring in a fixed manner,
- a blockade, mounted together with the holder of the disc with a spring in the lowest point of the construction which is arranged to limit the depth of the disc's penetration into the ground, wherein said blockage protects the structure from damage, wear, accumulation of material, and is adapted for smooth sliding over the terrain in the event that maximum cut is achieved,
- a holder of an injector or nozzle of the injector, which is mounted on the disc's axis so that it rotates freely around the dis, wherein said holde is mounted in the center of the disc to be able to adapt to the terrain,
- the nozzle, which is at one end adapted for connection to an injection or pipe, through which the substance for injection is fed into the terrain, and is on the other side provided with a bottom, usually widened part, through which slurry or liquid fertilizer exits the trailing shoe,
- a plough configured to copy the terrain, wherein the plough has the same thickness as the supply so as to protect the supply along its width and is arranged to leave an open cut for the supplied substance, wherein the plough is mounted or placed on the holder, where the slurry supply is, wherein the plough is almost touching the disc and is pointed in the direction of travel so that material does not accumulate on it and that it opens the cut behind the disc,
- a spring, for example compression or tension spring, or a movable element, such as a cylinder with a piston, mounted on one side of the holder of the entire disc, and on the other side to the slurry supply holder, which also carries the plough, wherein depending on the position of the plough the position of the nozzle is adjusted so that regardless of the angle of the spring or the movable element to the terrain, the bottom part of the nozzle is parallel to the terrain, and wherein the spring or the movable element constantly presses said holder towards the ground.

Rotation of the holder is limited with a minimum and maximum angle, which are hardly achievable in normal working conditions, wherein both angles are limited with the base housing and the holder of the injection leaning together.

With this solution, the slurry or liquid fertilizer always falls down into the grooves made by the disc, without splashing in other directions or jamming the trailing shoe with the nozzle in the ground.

The invention thus relates to the the injection of slurry into the soil with the disk, which, depending on the characteristics of the spring, adjustment, and rubberized nozzle for discs, can be assigned to the category of trailing shoes, and, depending on the disc, also among disc injectors and also among distribution scarifiers (dethatcher) for introducing slurry into the soil behind a tank. The described solution according to the invention is therefore a hybrid between disk injectors, distribution scarifiers, and trailing shoes. The injection system can be used not only in the field of fertilization, but also in all other fields, such as watering and planting.

The advantage of using a disc is that due to the rotation of the cutting part or disc, wear is more even, and the disc cuts the material in front of it and does not drag the material behind it.

Any type of spring can be used for the spring. Preferably, a tension spiral spring is used, as it allows for the simplest and cheapest implementation. Alternatively, a torsion spring, pressure cylinders, levers, linkages, gears, toothed rack and cogwheel, and similar elements could also be used, but these solutions would be more complex.

Behind the disc a nozzle is provided, through which the medium is fed, wherein the medium is preferably slurry or liquid fertilizer, but it can also be water for watering or a mixture for planting crops. The nozzle can also be of other shapes and not necessarily made of rubber. The slurry inlet is spring-loaded with the said tension spiral spring or some other suitable element, so that it copies the uneven terrain behind it during use. This achieves stable injection directly into the ground - a channel made by the disc. Between the disc and the nozzle is a share-plate that slides on the terrain and, if the nozzle is rubber, also protects it from deformation.

By adapting or copying the terrain, the spring can be at a different angles relative to the terrain, which ensures efficient operation, fertilization, watering or planting.

The invention also relates to a working machine comprising at least one of the above-described trailing shoes or discs, preferably a plurality of trailing shoes mounted on a suitable frame. The working machine is preferably a slurry distributor, but may also be a watering device or a planting device, which also uses similar shoe systems for feeding media into the soil.

The invention will be described in further detail based on exemplary embodiments and figures, which show:
- Figure 1: The trailing shoe according to a possible embodiment
- Figure 2: Explosion view of the shoe components shown in figure 1
- Figure 3: The trailing shoe in a position, in which the angle of the spring to the surface is smaller, while the bottom edge of the nozzle is nevertheless paralel to the ground
- Figure 4: The trailing shoe in a position, in which the angle of the spring to the surface is larger, while the bottom edge of the nozzle is nevertheless paralel to the ground

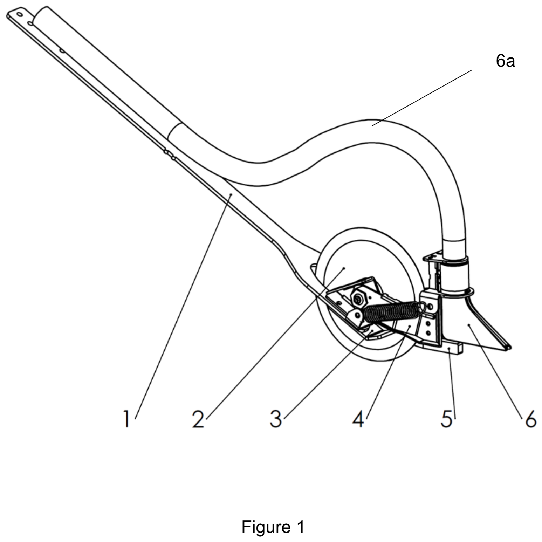

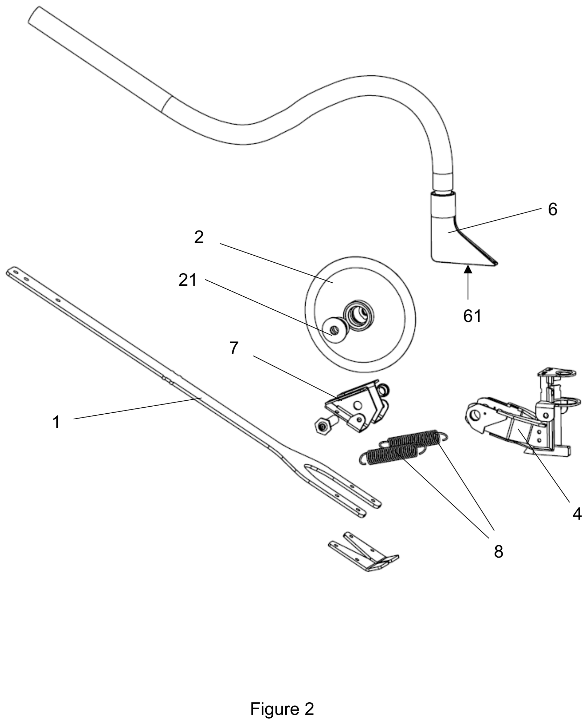

Figure 1 shows an embodiment of the trailing shoe, wherein the components are better visible on the explosion view shown in figure 2. The trailing shoe or the disc injector, which functions as a cultivator for inserting material, preferably slurry, into ground, and comprises:
- a spring 1 designed as a long flat element, a lower end of which is shaped like the letter Y so that the element has two legs with an intermediate space arranged for mounting a base housing 7,
- the base housing 7 of the cutting element, which is arranged for mounting the cutting element shaped as a disc 2,
- the cutting element shaped like a disc 2, which is supported by two ball bearings 21, through which a support axis is installed, wherein a holder 4 of the supply is mounted on said axis behind the disc, and wherein said axis is mounted on the holder on each side of the Y-shaped spring 1 in a fixed manner,
- a blockade 3, mounted together with the holder of the disc 2 with a spring in the lowest point of the construction which is arranged to limit the depth of the disc's penetration into the ground, wherein said blockage 3 protects the structure from damage, wear, accumulation of material, and is adapted for smooth sliding over the terrain in the event that maximum cut is achieved,
- a holder 4 of an injector or nozzle 6 of the injector, which is mounted on the disc's 2 axis so that it rotates freely around the disc 2, wherein said holder 4 is mounted in the center of the disc 2 to be able to adapt to the terrain,
- the nozzle 6, which is at one end adapted for connection to an injection or pipe 6a, through which the substance for injection is fed into the terrain, and is on the other side provided with a bottom, usually widened part 61, through which slurry or liquid fertilizer exits the trailing shoe,
- a plough 5 configured to copy the terrain, wherein the plough has the same thickness as the supply so as to protect the supply along its width and is arranged to leave an open cut for the supplied substance, wherein the plough 5 is mounted or placed on the holder 4, where the slurry supply is, wherein the plough 5 is almost touching the disc 2 and is pointed in the direction of travel so that material does not accumulate on it and that it opens the cut behind the disc 2,
- a pair of springs 8 or a movable element mounted on one side of the holder of the entire disc 2, and on the other side to the slurry supply holder 4, which also carries the plough 5, wherein depending on the position of the plough 5 the position of the nozzle 6 is adjusted so that regardless of the angle of the spring 8 or the movable element to the terrain, the lower part of the nozzle 6 is parallel to the terrain, and wherein the spring 8 or the movable element constantly presses said holder 4 of the supply towards the ground.

This solution allows for terrain copying, which means that the nozzle or its lower part, where slurry, liquid fertilizer, water or some other medium exits, is always located parallel to the base or ground.

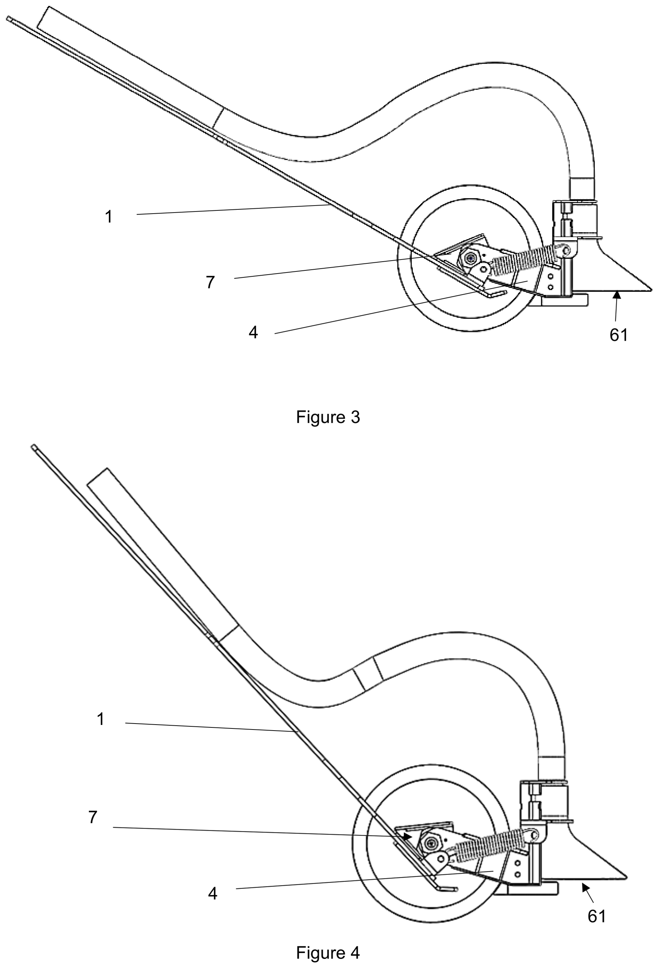

Figures 3 and 4 show different positions of the spring in relation to the surface, wherein the angle of the spring to the surface is smaller (figure 3) or larger (figure 4).

## Claims

1. A trailing shoe or disc for a working machine, wherein said trailing shoe comprises:
- a spring (1) designed as a long flat element, a lower end of which is shaped like the letter Y so that the element has two legs with an intermediate space arranged for mounting a base housing (7) for mounting a cutting element,
- the base housing (7) for mounting the cutting element,
- the cutting element shaped like a disc (2), which is supported by two ball bearings (21), through which a support axis is installed, wherein a holder (4) of the supply is mounted on said axis behind the disc, and wherein said axis is mounted on the holder on each side of the Y-shaped spring (1) in a fixed manner,
- a blockade (3), mounted together with the holder of the disc (2) with a spring in the lowest point of the construction which is arranged to limit the depth of the disc's penetration into the ground,
- a holder (4) of an injector or nozzle (6) of the injector, which is mounted on the disc's (2) axis so that it rotates freely around the disc (2), wherein said holder (4) is mounted in the center of the disc (2) to be able to adapt to the terrain,
- the nozzle (6), which is at one end adapted for connection to an injection or pipe (6a), through which the substance for injection is fed into the terrain, and is on the other side provided with a bottom, usually widened part (61), through which slurry or liquid fertilizer exits the trailing shoe,
- a plough (5) configured to copy the terrain, wherein the plough has the same thickness as the supply so as to protect the supply along its width and is arranged to leave an open cut for the supplied substance, wherein the plough (5) is mounted or placed on the holder (4),
- a pair of springs (8) or a movable element mounted on one side of the holder of the entire disc (2), and on the other side to the slurry supply holder (4), which also carries the plough (5), wherein depending on the position of the plough (5) the position of the nozzle (6) is adjusted so that regardless of the angle of the spring (8) or the movable element to the terrain, the lower part of the nozzle (6) is parallel to the terrain, and wherein the spring (8) or the movable element constantly presses said holder (4) of the supply towards the ground.

2. The trailing shoe or disc for a working machine according to claim 1, wherein the plough (5) is almost in contact with the disc (2) and is pointed in the direction of travel to prevent material from accumulating on it and to open the cut behind the disc (2).

3. The trailing shoe or disc for a working machine according to claim 1, wherein the spring (8) compression, torsion or tension spring.

4. The trailing shoe or disc for a working machine according to claim 1, wherein the movable element is a cylinder with a piston, a pressurized cylinder, levers, linkages, or a cogwheel and a toothed rack.

5. The trailing shoe or disc for a working machine according to any of the preceding claims, wherein rotation of the holder (4) of the supply is limited with a minimum and maximum angle, which are hardly achievable in normal working conditions, wherein both angles are limited with the blockade (3) and the holder (4) of the injection are leaned together.

6. A working machine with the trailing shoe or the disc according to any of the preceding claims.

7. The working machine according to the preceding claim, wherein the working machine is a manure distributor, a watering device or a planting device.

8. The working machine according to the preceding claim, wherein the working machine is a slurry distributor, which comprises a plurality of trailing shoes installed on a suitable frame.
